# EUROPÄISCHE PATENTSCHRIFT

(11) **EP 0 122 586 B1**
(45) Veröffentlichungstag und Bekanntmachung des Hinweises auf die Patenterteilung: **10.03.1993**
(21) Anmeldenummer: 84103979.5
(22) Anmeldetag: 10.04.1984
(51) Int. Cl.: C08F 2/22, C08L 101/00

(54) **Verfahren zur Hertellung von emulgator- und schutzkolloidfreie Emulsionspolymerisate.**
Process for the preparation of emulsion polymers wthout an emulsifier and a protective colloid.
Procédé de la préparation des polymères en émulsion sans émulsifiant ni colloide protecteur.

(30) Priorität: 16.04.1983 DE 3313922
(43) Veröffentlichungstag der Anmeldung: 24.10.1984
(73) Patentinhaber: HOECHST AKTIENGESELLSCHAFT, 65926 Frankfurt am Main (DE)
(72) Erfinder: Engel, Dieter, Dr., D-6092 Kelsterbach (DE); Rinno, Helmut, Dr., D-6238 Hofheim am Taunus (DE)

(56) Entgegenhaltungen:
- EP-A- 0 007 042
- EP-A- 0 054 685
- EP-B- 0 007 391
- DE-C- 2 264 224
- Textbook of Polymer Science, 2nd Ed., John Wiley & Sons, New-York, 1971, Seite 364-365.
- Römpps Chemie-Lexikon, 7.Auflage, 1973, Seite 1010-1011.
- A. Kotera et al.: Colloid chem. studies of polystyrene latices polymerized without any surfaceactive agents, Kolloid-Zeitschrift & Zeitschrift für Polymere, Bd. 239, 1970, S. 677-681
- T. Matsumoto, A. Ochi, Kobunchi Kagaku 22, 481, 1965, p.2194
- J.W. Goodwin et al.: Studies on the preparation and characterisation of monodisperse polystyrene latices; Colloid & Polymer Science, Vol. 252, 1974, 464-471

## Beschreibung

Die Erfindung betrifft Verfahren zur Herstellung von emulgator- und schutzkolloidfreien Emulsionspolymerisaten und ihre Verwendung in Dispersions- oder Pulverform zur Modifizierung von Polymerwerkstoffen oder zur Herstellung von Formkörpern, insbesondere Folien.

Emulgatorfreie wäßrige Polymerisatdispersionen sind bereits bekannt (vgl. EP-A 0054 685 und DE-OS 3 106 502). Ihnen allen ist gemeinsam, daß sie zur Erzielung einer ausreichenden Stabilität bei hohem Feststoffgehalt entweder den Einsatz von Schutzkolloiden erfordern, oder aber zumindest den Einsatz von wenigstens einem hydrophilen Monomeren. Gemäß der EP-A 0 054 685 wird daher vorzugsweise mit Monomeranteilen von Glycidylmethacrylat polymerisiert, während gemäß der DE-OS 31 06 502 in Anwesenheit von in organischen Lösungsmitteln löslichen Emulgatorsäuren polymerisiert wird

Nach der EP-A 0 054 685 wird in einem batch-Verfahren unter Vorlage der gesamten Monomermenge polymerisiert. Hierbei werden, auch bei Mitverwendung von mehrfach ungesättigten Monomeren, jedoch nur Dispersionen mit sehr niedrigen Feststoffgehalten (ca. 10 Gew.-%) bei unvollständigem Monomerenumsatz erhalten. Außerdem ist eine sorgfältige Reinigung der monomeren Ausgangsstoffe notwendig. Die Polymerisation selbst muß unter Schutzgas durchgeführt werden. Bei der Herstellung von Polymerisatdispersionen ist es aber in aller Regel von Vorteil, höhere Feststoffgehalte einzustellen, um einerseits größere Raum-Zeit-Ausbeuten zu erzielen und andererseits beispielsweise ein allzu rasches Absetzen der Polymerpartikel in der Dispersion zu verhindern. Bei verschiedenen Anwendungen derartiger Dispersionen muß deren Wasseranteil entfernt werden, wobei es natürlich von Vorteil ist, wenn die Dispersion bereits von vornherein möglichst wenig Wasser enthält. Ferner bedeutet es für großtechnische Synthesen einen unverhältnismäßigen Mehraufwand, wenn die Ausgangsstoffe hochgereinigt werden müssen, wie dies gemäß der EP-A 0 054 685 erforderlich ist.

Die in der DE-OS 31 06 502 genannten wasserlöslichen bzw. hydrophilen Zusätze zur Stabilisierung der Dispersion können sich beim Einsatz der Dispersionen als Systeme bzw. als Mischkomponenten zur Modifizierung von Polymerwerkstoffen bzw. anderen Materialien, wie beispielsweise Polymerrohstoffen für die thermoplastische Verarbeitung, für verschiedenste Anwendungszwecke nachteilig dahingehend auswirken, daß im fertigen Produkt ein Aufschwimmen der nicht kovalent fixierten Stabilisierungszuschläge auftreten kann, wodurch die Produkteigenschaften empfindlich gestört werden können. Beispielsweise kann die Temperaturbeständigkeit bzw. die Wärmestandfestigkeit von solchermaßen modifizierten Polymerwerkstoffen durch derartige nicht kovalent fixierten Fremdstoffe beeinträchtigt werden.

Auch bei alleiniger Anwendung der Dispersionspolymerisate können solche nicht kovalent fixierten Stabilisierungsbestandteile die Polymerisateigenschaften nachteilig beeinflussen und verschiedene Anwendungen verbieten.

EP-A-7 042 beschreibt die Herstellung von emulgatorfreien Kaidschuklatices durch Emulsionspolymerisation von (Meth)acrylsäure mit einem Gemisch von acyclischen konjugierten Dienen (vorzugsweise Butadien) und Arylvinylmonomeren und/oder (Meth)acrylnitril. Hierbei wird ein Teil der Monomeren in wäßrigen Emulsion vorpolymerisiert und nach Zugabe des restlichen Teils der Monomeren auspolymerisiert.

Der Erfindung lag daher die Aufgabe zugrunde, emulgator- und schutzkolloidfreie Emulsionspolymerisate zu entwickeln, welche die vorstehend beschriebenen Nachteile nicht besitzen und welche vorzugsweise enge Teilchengrößenverteilungen D_{w}/Dₙ≦1,2, insbesondere im Partikeldurchmesserbereich zwischen 0,02 µm und 5 µm,besitzen. Die Dispersionen solcher organischen Polymerisate sollen ferner bei relativ hohem Feststoffgehalt weitgehend frei von jeglichen nicht kovalent fixierten Stabilisierungszuschlägen sein und dabei trotzdem ausreichende Lagerungs- und Temperaturstabilitäten besitzen.

Dispersionen organischer Polymerisatpartikel mit durchschnittlichen Teilchendurchmessern zwischen 0,02 und 5 µm lassen sich beispielsweise sehr vorteilhaft zur Modifizierung verschiedener Materialien, insbesondere Polymerwerkstoffe, einsetzen. Bei zahlreichen Anwendungen von organischen Polymerisatdispersionen bzw. Polymerisaten ist es z.B. wesentlich, daß die eingesetzten Dispersionen bzw. die Polymerisate frei sind von Emulgatoren und von Schutzkolloiden oder gegebenenfalls nur geringfügige Mengen davon enthalten. Trotzdem muß die Dispersion aber lagerungs- und temperaturstabil sein sowie frei von Restmonomeren und unempfindlich gegen Koagulation bzw. Agglomeration beim Lagern bzw. beim Einsatz in einem mit ihr abzumischenden System.

Andererseits bieten sich pulverförmigen Emulsionspolymerisaten, die frei sind von Emulgatoren und von Schutzkolloiden, interessante Anwendungsgebiete beispielsweise in solchen Bereichen an, die bisher den Suspensionspolymerisaten vorbehalten sind, wie z.B. die Herstellung von Formkörpern, insbesondere Folien.

Diese Aufgabe konnte nun überraschenderweise durch Emulsionspolymerisate bzw. deren Dispersionen gelöst werden, die erhalten werden durch Polymerisation von ethylenisch ungesättigten Monomeren in einem wäßrigen System in Abwesenheit von acyclischen konjugierten Dienen, Emulgatoren und Schutzkolloiden unter Verwendung von teilweise oder vollständig wasserlöslichen radikalischen Initiatoren, wobei zumindest bei Polymerisationsbeginn eine mehrfach ethylenisch ungesättigte copolymerisationsfähige Verbindung in einer Menge von mehr als 0,01 Gew.-%, bezogen auf die Gesamtmonomermenge, in dem Polymerisationsgemisch zugegen sein muß. In einer bevorzugten Erfindungsvarianten können dabei emulgator- und schutzkolloidfreie Polymerisatdispersionen mit mittleren Teilchendurchmessern zwischen 0,02 und 5 µm bei enger Teilchengrößenverteilung (D_{w}/Dₙ ≦ 1,2) erhalten werden. Besonders bevorzugt sind dabei Polymerisatdispersionen mit Teilchendurchmessern zwischen 0,05 und 2,0 µm, die eine Teilchengrößenverteilung von D_{w}/Dₙ ≦ 1,05 aufweisen.

Die Teilchengrößenverteilung D_{w}/Dₙ ist eine Maßzahl zur Beurteilung der Einheitlichkeit von Dispersionspartikeln. Sie ist definiert als der Quotient aus dem Gewichtsmittel der Teilchendurchmesser (D_{w}) und dem Zahlenmittel der Teilchendurchmesser (Dₙ). Sie kann bei völliger Einheitlichkeit die Größe 1 annehmen. Uneinheitlichkeiten werden durch Zahlenwerte größer als 1 charakterisiert (vgl. U.E. Woods et al., Journal of Paint Technology, Vol. 40, Nr. 527 (1968) Seite 545). Die Ermittlung der Teilchengrößen kann nach bekannten Methoden erfolgen, z.B. elektronenmikroskopisch (vgl. S.H. Maron et al., Journal of Appl. Physics Vol. 23 (1952) Seite 900). Hiermit ist die Charakterisierung eines Latex bzw. einer Polymerisatdispersion bezüglich der Uniformität der Teilchengrößenverteilung für Vergleichszwecke durch die Angabe einer einzigen Zahl, nämlich der Verhältniszahl D_{w}/Dₙ möglich.

Entsprechende emulgator- und schutzkolloidfreie nichtwäßrige Polymerisatdispersionen können erfindungsgemaß erhalten werden, indem man die Polymerisation entweder in einem homogenen Gemisch aus Wasser und einer mit Wasser mischbaren nichtwäßrigen Phase als Dispergiermedium durchführt, oder indem man die mit Wasser mischbare nichtwäßrige Phase nach beendeter Polymerisation mit der wäßrigen Dispersion vermischt und in beiden Fällen das Wasser anschließend aus dem Gemisch mehr oder weniger vollständig entfernt. Dies kann z.B. durch Destillation erfolgen. Besonders bevorzugt ist die Vakuumdestillation.

Aus den wäßrigen Polymerisatdispersionen können durch Wasserentzug die Emulsionspolymerisate in emulgator- und schutzkolloidfreier trockener Pulverform erhalten werden.

Der Wasserentzug kann z.B. durch Sprühtrocknung, Gefriertrocknung oder Dünnschichtverdampfung erfolgen. Bevorzugt ist die Sprühtrocknung.

Gegenstand der Erfindung ist daher ein Verfahren zur Herstellung von emulgator- und schutzkolloidfreien Polymerisaten durch radikalisch initiierte Emulsionscopolymerisation von ethylenisch einfach mit ethylenisch mehrfach ungesättigten copolymerisationsfähigen Monomeren, dadurch gekennzeichnet, daß man in Abwesenheit von acyclischen konjugierten Dienen Emulgatoren und Schutzkolloiden und unter Verwendung eines oder mehrerer wasserlöslicher radikalbildender Initiatoren in wäßriger Emulsion zunächst eine mehrfach ethylenisch ungesättigte copolymerisationsfähige Monomermenge oder Monomerteilmenge von mindestens 0,01 Gew.-%, bevorzugt 0,01 bis 20 Gew.-%, besonders bevorzugt 0,02 bis 10 Gew.-%, insbesondere 0,1 bis 5 Gew.-%, bezogen auf die Gesamtmonomerenmenge, gegebenenfalls allein oder vorzugsweise zusammen mit einer Teilmenge der einfach ethylenisch ungesättigten Monomeren, bevorzugt 0,5 bis 40 Gew.-%, besonders bevorzugt 1 bis 30 Gew.-%, insbesondere 1,5 bis 15 Gew.-%, bezogen auf die Gesamtmonomerenmenge, vorpolymerisiert und anschließend die Restmenge der einfach ethylenisch ungesättigten Monomeren sowie ggf. die Restmenge der mehrfach ethylenisch ungesättigten Monomeren und gegebenenfalls die restliche Initiatormenge zudosiert, die Mischung zu Ende polymerisiert und gegebenenfalls anschließend die Polymerisate aus der erhaltenen Dispersion isoliert.

Der disperse polymere Feststoffanteil in den resultierenden Polymerisatdispersionen beträgt vorzugsweise 20 bis 55 Gew.-%, insbesondere 25 bis 45 Gew.-%, bezogen auf die Dispersion.

Das Verfahren kann diskontinuierlich oder auch kontinuierlich durchgeführt werden.

Die Polymerisate liegen erfindungsgemäß vorzugsweise in Dispersionsform oder in trockener Pulverform vor. Sie können aber auch Formkörper, insbesondere Folien, bilden.

Bevorzugt sind solche erfindungsgemäßen Polymerisate, deren polymere Feststoffpartikel Durchmesser im Bereich von 0,02 bis 5 µm, vorzugsweise 0,05 bis 2,0 µm, und eine enge Teilchengrößenverteilung aufweisen, so daß der Quotient aus dem Gewichtsmittel der Teilchendurchmesser (D_{w}) und dem Zahlenmittel der Teilchendurchmesser (Dₙ) bevorzugt <1,2, besonders bevorzugt <1,1, insbesondere <1,05, ist.

Als ethylenisch ungesättigte Monomere kommen praktisch alle radikalisch polymerisierbaren Monomeren mit Ausnahme der acyclischen konjugierten Diene in Frage, wobei jedoch für Copolymerisationen die üblichen Einschränkungen gelten, die durch das Q- und e-Schema nach Alfrey und Price bzw. die Copolymerisationsparameter vorgegeben sind (vgl. z.B. Brandrup, Immergut, Polymer Handbook, 2nd ed. (1975) John Wiley & Sons, New York). Ausdrücklich darauf hinzuweisen ist, daß das Vorhandensein hydrophiler Monomerer für die Durchführung der erfindungsgemäßen Polymerisationen generell nicht notwendig, aber möglich ist.

Als ethylenisch ungesättigte Monomere können so z.B. folgende Typen eingesetzt werden.
a) Monomere vom Methacrylattyp, vorzugsweise Methylmethacrylat, n-Butylmethacrylat, 2-Ethylhexylmethacrylat, Ethylmethacrylat, Glycidylmethacrylat, Hydroxyethylmethacrylat, Hydroxypropylmethacrylat, Glycidylmethacrylat, Methacrylamid, N-Methylolmethacrylamid, Methacrylnitril, tert.-Butylmethacrylat, Methacrylsäure,
b) Monomere vom Acrylattyp, vorzugsweise Ethylacrylat, Propylacrylat, n-Butylacrylat, tert.-Butylacrylat, 2-Ethylhexylacrylat, Acrylsäure, Acrylnitril, Glycidylacrylat, tert.-Butylacrylat,
c) Monomere vom Vinylaromatentyp, vorzugsweise Styrol, Vinyltoluol, Vinylpyridin,
d) Monomere vom Vinylestertyp, vorzugsweise Vinylacetat, Vinylester verzweigter (C₉-C₁₂)-Carbonsäuren wie Versaticsäurevinylester, Linolsäurevinylester,
e) Monomere vom Typ anderer Mono- und Dicarbonsäuren, vorzugsweise Crotonsäure, Maleinsäure, Itakonsäure oder deren Ester bzw. Halbester,
f) Monomere ungesättigter Halogenverbindungen, vorzugsweise Vinylchlorid oder Vinylidenchlorid,
g) Monomere vom Typ mehrfach ethylenisch ungesättigter Verbindungen, vorzugsweise Divinylbenzol, Ethandioldiacrylat, Ethandioldimethacrylat, Propandioldiacrylat, Propandioldimethacrylat, Butandioldiacrylat, Butandioldimethacrylat, Hexandioldiacrylat, Hexandioldimethacrylat, Glycerintriacrylat, Glycerintrimethacrylat, Pentaerythritoltriacrylat, Pentaerythritoltrimethacrylat, Diallylphthalat.

Der Einsatz der unter g) genannten mehrfach ethylenisch ungesättigten Verbindungen ermöglicht es u.a. überraschenderweise, während der Emulsionscopolymerisation zu hohen Feststoffgehalten zu gelangen und in der fertigen Dispersion gleichzeitig eine sehr gute Stabilität gegenüber einer Koagulation des Ansatzes zu erzielen. Es ist dazu mindestens während der Startphase der Polymerisation in der vorgelegten Monomerenmenge ein Gehalt an einer der unter g) genannten Verbindungen von wenigstens 0,01 Gew.-%, bezogen auf die Gesamtmonomerenmenge, erforderlich.

Die Menge der mehrfach ethylenisch ungesättigten Monomeren soll im allgemeinen bevorzugt zwischen 0,01 und 20 Gew.-%, bezogen auf die Gesamtmenge der Monomeren, besonders bevorzugt 0,02 - 10 Gew.-%, insbesondere 0,02 - 5 Gew.-%, betragen.

Durch den Zusatz dieser als Vernetzer fungierenden mehrfach ethylenisch ungesättigten Monomeren sind Latices mit teilweise oder vollständig vernetzten Partikeln herstellbar, die bei Feststoffgehalten von bis zu ca. 55 Gew.-% näherungsweise monodisperse Teilchengrößenverteilungen mit durchschnittlichen Teilchendurchmessern im Bereich von 0,02 bis 5 µm aufweisen können. Es können Teilchen von weicher, gummielastischer Konsistenz bis zu harter, spröder, hochvernetzter Struktur hergestellt werden.

Bevorzugte Monomerkombinationen sind beispielsweise Acrylat- bzw. Methacrylat-Monomere als monoolefinisch ungesättigte Verbindungen und Divinylbenzol als mehrfach ungesättigte Verbindung. Besonders bevorzugt sind beispielsweise Kombinationen aus Methylmethacrylat, Butylacrylat und Divinylbenzol; oder Styrol, Butylacrylat und Divinylbenzol; oder Styrol, Methylmethacrylat und Divinylbenzol, oder Methylmethacrylat, Butylacrylat, Divinylbenzol, Methacrylsäure und/oder Acrylsäure; oder Styrol und Divinylbenzol; oder Styrol, Acrylnitril und Divinylbenzol; oder Vinylacetat und Butandioldimethacrylat; oder Methylmethacrylat, Butylacrylat und Butandioldimethacrylat; oder Acrylnitril und Divinylbenzol; oder Vinylchlorid und Divinylbenzol.

Die Zusammenstellung der Monomeren ist vorzugsweise so auszurichten, daß der Anteil an hydrophilen Monomeren, wie z.B. Acrylsäure, Methacrylsäure, Acrylnitril, Hydroxyethylmethacrylat, Glycidylmethacrylat, Maleinsäure, Maleinsäurehalbester, etc., nicht größer als 25 Gew.-%, vorzugsweise ≦15 Gew.-% ist, bezogen auf die Gesamtmonomermenge.

Die Polymerisationsflotte wird gerührt mit den bei Emulsionspolymerisationen üblichen Rührgeschwindigkeiten, beispielsweise mit 10-200, vorzugsweise 30-100 U/Min.

Erfindungsgemäße Dispersionen organischer Polymerisatpartikel können beispielsweise bevorzugt in folgender Weise hergestellt werden:
Ein wäßriges System, das eine oder mehrere Arten ethylenisch ungesättigter Monomerer enthält, wovon 0,1 - 100 Gew.-%, bevorzugt 0,5 - 60 Gew.-%, insbesondere bevorzugt 1-40 Gew.-%, bezogen auf die vorgelegte Monomermenge, mehrfach ethylenisch ungesättigte Monomere sein müssen, wird mit 0,01 bis 10 Gew.-% eines wasserlöslichen radikalbildenden Initiators, bevorzugt 0,02 - 5 Gew.-%, besonders bevorzugt 0,05 - 3,0 Gew.-%, bezogen auf die Gesamtmonomermenge des Ansatzes, versetzt und die Polymerisation gestartet, beispielsweise durch thermolytische Zersetzung des radikalischen Initiators. Anstelle der Vorlage der Gesamtmenge des Initiators kann auch nur ein Teil des Initiators, bevorzugt 1-90 Gew.-%, besonders bevorzugt 5-70 Gew.-%, insbesondere 10-60 Gew.-%, bezogen auf die Gesamtmenge des Initiators, in der wäßrigen Flotte vorgelegt und die Restmenge als wäßrige Lösung mit der noch vorhandenen Menge der Monomeren nachdosiert werden.

Der Anteil an Monomeren in dem vorgelegten Polymerisationsgemisch beträgt zu Beginn der als Vorpolymerisation bezeichneten Polymerisationsreaktion in diesem Gemisch vorzugsweise 0,01 - 30 Gew.-%, besonders bevorzugt 0,1-25 Gew.-%, insbesondere 1-20 Gew.-%, bezogen auf die vorgelegte Gesamtmenge aus wäßriger Phase und nichtwäßriger Monomerenphase.

Die Dauer der Vorpolymerisation beträgt zwischen 0,1 min und 3 Stunden, bevorzugt 0,5 min bis 2 Stunden, besonders bevorzugt 1 min bis 1 Stunde. Die Polymerisationstemperatur liegt üblicherweise in einem solchen Temperaturbereich, bei dem der Initiator bzw. das Initiatorsystem Halbwertszeiten des Zerfalls zwischen 20 min und 15 Stunden aufweist. Nach Beendigung der Vorpolymerisation werden die noch vorhandenen Mengen des oder der Monomeren und gegebenenfalls der restliche Initiator dem Polymerisationsansatz zudosiert. Die Dosiergeschwindigkeit des oder der Monomeren und ggf. des restlichen Initiators ist auf die Zerfallsgeschwindigkeit des Initiators bzw. des Initiatorsystems in der Weise abzustimmen, daß während der Polymerisation Monomeres nicht aufschwimmt oder sich absetzt.

Die erfindungsgemäßen Emulsionspolymerisationen werden vorzugsweise im sauren pH-Bereich <pH 7, vorzugsweise bei pH 1 bis 5, durchgeführt.

Durch den Einsatz von Molekulargewichtsreglern kann das Molekulargewicht der Polymerisate in bekannter Weise herabgesetzt werden. Bevorzugt werden hier Mercaptane, halogenhaltige Verbindungen und andere radikalübertragende Substanzen eingesetzt. Besonders bevorzugt sind Butylmercaptan, Octylmercaptan, Dodecylmercaptan, Tetrakismercaptoacetylpentaerythrit, Chloroform, Tetrachlorkohlenstoff, Trichlorethylen, Trichlorbrommethan, Bromoform, Toluol. Als radikalbildende Initiatoren werden bevorzugt wasserlösliche Peroxide, Azoverbindungen bzw. Redoxsysteme eingesetzt. Besonders bevorzugt sind z.B. Na-, K-, Ammoniumperoxidisulfat bzw. Na-, K-, Ammoniumperoxidisulfat-Redoxsysteme mit Sulfiden, Sulfiten oder anderen Reduktionsmitteln. Bevorzugt sind die gut und vollständig wasserlöslichen radikalbildenden Initiatoren. Die Menge des radikalbildenden Initiators beträgt vorzugsweise 0,01 bis 10 Gew.-%, besonders bevorzugt 0,02-5 Gew.-%, insbesondere 0,05-3,0 Gew.-%, bezogen auf die Gesamtmonomerenmenge.

Die Teilchengröße der Polymerisatpartikel kann u.a. beeinflußt werden durch die Art der verwendeten Monomeren und deren Löslichkeitsverhalten in Wasser, ferner durch die Art und Menge des verwendeten wasserlöslichen radikalbildenden Initiators bzw. der Art seiner Dosierung, außerdem durch die Art und Menge des verwendeten mehrfach ethylenisch ungesättigten und zu polymeren Vernetzungen führenden Comonomeren sowie der Art und Menge der ggf. mit dem letzteren in der Vorpolymerisation und ggf. auch in der Hauptpolymerisation copolymerisierenden einfach ethylenisch ungesättigten Monomeren.

Für manche Einsatzgebiete kann es vorteilhaft sein, die nach dem erfindungsgemäßen Verfahren erhaltenen wäßrigen Dispersionen in nichtwäßrige Dispersionen überzuführen.

Um nach dem erfindungsgemäßen Verfahren hergestellte emulgatorfreie und schutzkolloidfreie nichtwäßrige Dispersionen zu erhalten, wird entweder die oben beschriebene Polymerisation in einem Gemisch aus Wasser und inerter nichtwäßriger organischer Verbindung durchgeführt, oder es werden nach erfolgter Polymerisation in wäßriger Phase eine ausreichende Menge nichtwäßrige organische Verbindung oder ein Gemisch solcher Verbindungen zugesetzt und das Wasser entfernt. Es handelt sich bei diesen wasserlöslichen organischen Verbindungen um Glykole und Polyglykole. So sind für die Verwendung der Polymerisatdispersionen zur Pigmentierung von beispielsweise Polyesterrohstoffen, die z.B. zur Herstellung von Folien, Fasern oder Fäden verwendet werden können, Dispergiermedien aus Ethylenglykol bzw. aus Mischungen, die Ethylenglykol enthalten, ganz besonders bevorzugt.

Das mit Wasser mischbare nichtwäßrige Dispergiermedium bzw. die mit Wasser mischbare nichtwäßrige flüssige Phase enthält bevorzugt inerte wasserlösliche hydroxylgruppenhaltige organische Verbindungen, nämlich Glykole oder Polyglykole.

Bei der destillativen Entfernung des Dispersionswassers ist die Verwendung solcher nicht-wäßriger Bestandteile bevorzugt, deren Siedepunkt höher als der Siedepunkt des Wassers liegt. Besonders bevorzugt ist Ethylenglykol.

Aus Mischungen mit Ethylenglykol wird Wasser bevorzugt durch Destillation bei Normaldruck oder unter Vakuum ausgetrieben. Die Verwendung von Schleppern bzw. ternären Gemischen kann bei der destillativen Entfernung des Wassers von besonderem Vorteil sein. Der in der resultierenden Dispersion verbleibende Wassergehalt richtet sich nach dem Verwendungszweck der Dispersion, beispielsweise nach der Wasserempfindlichkeit des mit den Polymerisatteilchen zu pigmentierenden Systems. Mit steigendem Wassergehalt kann aber auch sowohl die Viskosität als auch die Dichte der resultierenden Dispersion absinken, was in beiden Fällen die Absetzneigung fördert und damit die Lagerungsstabilität nachteilig beeinflussen kann.

Bevorzugt wird daher ein Wassergehalt in der "nichtwäßrigen" Polymerisatdispersion von weniger als 20 Gew.-%, besonders bevorzugt weniger als 10 Gew.-%, ganz besonders bevorzugt weniger als 5 Gew.-%, bezogen auf die Dispersion, angestrebt.

Weitere Einsatzgebiete der Polymerisate erfordern die Verwendung der isolierten Polymeren z.B. in trockener Pulverform, die aus den wäßrigen Dispersionen beispielsweise durch Dünnschichtverdampfung, Gefriertrocknung oder insbesondere durch Sprühtrocknung erhalten werden können. Das auf diese Weise isolierte Polymerisatpulver kann in andere Rohstoffe bzw. Produkte eingearbeitet werden. Es kann aber auch als Polymerrohstoff unmittelbar zu Formkörpern, insbesondere zu Folien, nach üblichen Methoden verarbeitet werden.

Die Erfindung wird durch die nachstehenden Beispiele näher erläutert. Die in den Beispielen angegebenen Teile sind Gewichtsteile, sofern nichts anderes angegeben ist.

### Beispiel 1

In einem Polymerisationsgefäß mit Rührer wurden 1780 Teile Wasser mit 100 Teilen einer Monomermischung aus 818 Teilen Methylmethacrylat, 441 Teilen Butylacrylat und 25,2 Teilen Divinylbenzol (50 gew.-%ig) versetzt. Die Mischung wurde auf 80°C erhitzt und mit 51 Teilen einer Lösung aus 2 Teilen Ammoniumpersulfat in 100 Teilen Wasser versetzt. Nach 20 min. Vorpolymerisation wurde der Rest des Monomeren im Verlauf von 7 Stunden zudosiert. Die restlichen Teile der Initiatorlösung wurden nach Ende der Monomerdosierung zugesetzt. Die Nachreaktionsdauer betrug 1 h bei 80°C. Die nach diesem Verfahren hergestellte Dispersion besaß einen Feststoffgehalt von 39,9 Gew.-%, eine durchschnittliche Teilchengröße (D_{w}) von 0,57 µm und eine Teilchengrößenverteilung D_{w}/Dₙ von <1,1. Die Dispersion war stabil und gut lagerungsbeständig.

### Vergleichsbeispiel 1

Führte man die Polymerisation von Beispiel 1 ohne den dort angegebenen Zusatz von Divinylbenzol aus, so koagulierte die Dispersion bereits vor dem Ende der Monomerzugabe.

### Beispiel 2

In einem Polymerisationsgefäß mit Rührer wurden 886 Teile Wasser mit 50 Teilen einer Monomermischung, bestehend aus 400,5 Teilen Methylmethacrylat und 220,5 Teilen Butylacrylat, sowie mit 6,3 Teilen Divinylbenzol (50 gew.-%ig) versetzt. Die wäßrige Mischung wurde auf 80°C erhitzt und mit 25,5 Teilen einer Lösung aus 1 Teil Ammoniumpersulfat in 50 Teilen Wasser versetzt. Nach 20 min. wurde der Rest des Monomeren über 7 Stunden zudosiert. Der restliche Teil der Initiatorlösung wurde nach Dosierende zugegeben. Die Nachreaktionsdauer betrug 1 h bei 80°C. Die nach diesem Verfahren hergestellte Dispersion besaß einen Feststoffgehalt von 40 Gew.-% bei einer Teilchengrößenverteilung D_{w}/Dₙ von <1,05. Die Dispersion war stabil und gut lagerungsbeständig. Die durchschnittliche Teilchengröße (D_{w}) betrug 0,33 µm.

### Vergleichsbeispiel 2

Führte man die Polymerisation von Beispiel 2 ohne den dort angegebenen Zusatz von Divinylbenzol aus, so koagulierte die Dispersion noch vor dem Ende der Monomerzugabe.

### Beispiel 3

In einem Polymerisationsgefäß mit Rührer wurden 724,6 Teile Wasser, 6,3 Teile Divinylbenzol (50 gew.-%ig) und 50 Teile einer Mischung aus 315 Teilen Methylmethacrylat, 315 Teilen Butylacrylat, 12,6 Teilen Methacrylsäure und 6,3 Teilen Acrylsäure miteinander vermischt. Die Mischung wurde auf 80°C erhitzt und mit einer Lösung aus 0,63 Teilen Ammoniumperoxidisulfat in 15 Teilen Wasser versetzt. Nach 20 min. Vorpolymerisation wurde das restliche Monomere über 7 Stunden zudosiert. Parallel dazu wurden 1,26 Teile Ammoniumperoxidisulfat, in 30 Teilen Wasser gelöst, zudosiert. Nach Dosierende wurden nochmals 0,63 Teile Ammoniumperoxidisulfat, gelöst in 15 Teilen Wasser, zugegeben. Die Nachreaktionsdauer bei 80°C betrug 1 Stunde.

Die nach diesem Verfahren hergestellte Dispersion besaß einen Feststoffgehalt von 45 Gew.-% bei einer Teilchengrößenverteilung D_{w}/Dₙ von <1,05. Die Dispersion war stabil und gut lagerungsbeständig. Die durchschnittliche Teilchengröße (D_{w}) betrug 0,41 µm.

### Vergleichsbeispiel 3

Führte man die Polymerisation von Beispiel 3 ohne den dort angegebenen Zusatz von Divinylbenzol aus, so koagulierte die Dispersion bereits vor dem Ende der Monomerzugabe.

### Beispiel 4

In einem Polymerisationsgefäß mit Rührer wurden 765 Teile Wasser mit 6,3 Teilen Divinylbenzol (50 gew.-%ig), 21 Teilen Natriumvinylsulfonat (30 gew.-%ig) und 50 Teilen einer Monomermischung aus 346,5 Teilen Styrol, 283,5 Teilen Butylacrylat, 12,6 Teilen Methacrylsäure und 6,3 Teilen Acrylsäure emulgiert.

Nach Erwärmen der Mischung auf 80°C wurde die Polymerisation durch Zusatz von je 5 Teilen einer Lösung aus 25,2 Teilen Ammoniumperoxidisulfat in 60 Teilen Wasser sowie 5 Teilen Na₂S₂O₅ in 60 Teilen Wasser initiiert. Die Dosierung des restlichen Monomeren sowie des Restes der Redoxinitiatorlösung setzte nach 20 min ein und wurde über 7 Stunden geführt.

Nach Dosierende wurden nochmals Lösungen von 0,25 Teilen Ammoniumperoxidisulfat in 5 Teilen Wasser und 0,5 Teilen Na₂S₂O₅ in 5 Teilen Wasser zugesetzt. Die Nachreaktionsdauer betrug 1 Stunde bei 80°C. Der Feststoffgehalt der Dispersion betrug 40,5 Gew.-% bei einer Teilchengrößenverteilung D_{w}/Dₙ von <1,15. Die Dispersion war stabil und gut lagerungsbeständig. Die durchschnittliche Teilchengröße (D_{w}) betrug 0,47 µm.

### Vergleichsbeispiel 4

Führte man die Polymerisation von Beispiel 4 ohne den dort angegebenen Zusatz von Divinylbenzol aus, so koagulierte die Dispersion bereits vor dem Ende der Monomerzugabe.

### Beispiel 5

Umstellung auf Ethylenglykol als Dispergiermedium. In einer Vakuum-Destillationsapparatur mit Rotationsverdampfer wurden zu 600 Teilen einer Dispersion, hergestellt nach Beispiel 1, 360 Teile Ethylenglykol zugesetzt. Unter einem Vakuum von 20-27 mbar (15-20 Torr) und einer Außentemperatur von 100-105°C wurden 328 Teile Wasser aus der Mischung abdestilliert. Die resultierende Dispersion besaß einen Feststoffgehalt von 38 Gew.-%.

## Patentansprüche

1. Verfahren zur Herstellung von emulgator- und schutzkolloidfreien Polymerisaten durch radikalisch initiierte Emulsionscopolymerisation von ethylenisch einfach mit ethylenisch mehrfach ungesättigten copolymerisationsfähigen Monomeren, dadurch gekennzeichnet, daß man in Abwesenheit von acyclischen konjugierten Dienen, Emulgatoren und Schutzkolloiden und unter Verwendung eines oder mehrerer wasserlöslicher radikalbildender Initiatoren zunächst eine mehrfach ethylenisch ungesättigte copolymerisationsfähige Monomermenge oder Monomerteilmenge von mindestens 0,01 Gew.-%, bezogen auf die Gesamtmonomerenmenge, gegebenenfalls allein oder vorzugsweise zusammen mit einer Teilmenge der einfach ethylenisch ungesättigten Monomeren in wäßriger Emulsion vorpolymerisiert und anschließend die Restmenge der einfach ethylenisch ungesättigten Monomeren sowie ggf. die Restmenge der mehrfach ethylenisch ungesättigten Monomeren und gegebenenfalls die restliche Initiatormenge zudosiert und die Mischung zu Ende polymerisiert.

2. Verfahren nach Anspruch 1, dadurch gekennzeichnet, daß die polymeren Feststoffpartikel Durchmesser im Bereich von 0,02 bis 5 µm und eine enge Teilchengrößenverteilung aufweisen, so daß der Quotient aus dem Gewichtsmittel der Teilchendurchmesser (D_{w}) und dem Zahlenmittel der Teilchendurchmesser (Dₙ) <1,2 ist.

3. Verfahren nach Anspruch 1, dadurch gekennzeichnet, daß der disperse polymere Feststoffanteil in den resultierenden Polymerisatdispersionen 20 bis 55 Gew.-%, bezogen auf die Dispersion, beträgt.

4. Verfahren nach Anspruch 1, dadurch gekennzeichnet, daß man dem Polymerisationsgemisch zu Beginn oder während oder nach dem Polymerisationsreaktion glykole oder Polyglykole, insbesondere Ethylenglykol, zusetzt und gegebenenfalls nach beendeter Polymerisation die Dispersion durch Destillation vom Wassergehalt teilweise oder vollständig befreit.

5. Verfahren nach Anspruch 1, dadurch gekennzeichnet, daß man der resultierenden, Polymerisatdispersion den Wasseranteil entzieht, vorzugsweise durch Sprühtrocknung, und das Polymerisat in Pulverform isoliert.

6. Verfahren nach Anspruch 1, dadurch gekennzeichnet, daß 0,01 bis 10 Gew.-%, bezogen auf die Gesamtmonomerenmenge, wasserlösliche radikalbildende Initiatoren eingesetzt werden.

7. Verfahren nach Anspruch 1, dadurch gekennzeichnet, daß 0,01 bis 20 Gew.-%, bezogen auf die Gesamtmonomerenmenge, mehrfach ethylenisch ungesättigte Monomere eingesetzt werden.

8. Verfahren nach Anspruch 1, dadurch gekennzeichnet, daß Monomere aus der Gruppe Acrylsäure-ester, -amide, -nitrile, Methacrylsäure-ester, -amide, -nitrile, Acrylsäure, Methacrylsäure, Vinylaromaten, Vinylester, Crotonsäure, Crotonester, Maleinsäure, Maleinsäureester oder -halbester, Itaconsäure, Itaconsäureester oder -halbester, Vinylhalogenide, oder deren Gemische, sowie Monomere aus der Gruppe Divinylbenzol, (C₂-C₆)-Alkandioldi(meth)acrylat, Glycerintri(meth)acrylat, Pentaerythritoltri(meth)acrylat, oder deren Gemische eingesetzt werden.

9. Verfahren nach einem der Ansprüche 1,2,3,4,5,6,7 oder 8, wobei die Polymerisate und Polymerisatdispersionen anschließend in andere Polymerwerkstoffe und Polymerrohstoffe eingearbeitet oder zu Formkörpern und Folien verarbeitet werden.

## Claims

1. A process for the preparation of polymers free from emulsifiers and protective colloids by the free-radical initiated emulsion copolymerization of mono-(ethylenically unsaturated) and poly-(ethylenically unsaturated), copolymerizable monomers, which comprises first subjecting to preliminary polymerization, in the absence of acyclic, conjugated dienes, emulsifiers and protective colloids and using one or more water-soluble, free-radical forming initiators in an aqueous emulsion, an amount or partial amount of at least 0.01% by weight, based on the total amount of monomers, of a poly-(ethylenically unsaturated) monomer, if appropriate on its own or, preferably, together with a partial amount of the mono-(ethylenically unsaturated) monomers, and then metering in the remaining amount of the mono-(ethylenically unsaturated) monomers and, if appropriate, the remaining amount of the poly-(ethylenically unsaturated) monomers and, if appropriate, the remaining amount of initiator and completing the polymerization of the mixture.

2. The process as claimed in claim 1, wherein the polymeric solid particles have a diameter within the range from 0.02 to 5 µm and a narrow particle size distribution, so that the ratio between the weight average of the particle diameters (D_{w}) and the number average of the particle diameters (Dₙ) is <1.2.

3. The process as claimed in claim 1, wherein the proportion of disperse, polymeric solids in the resulting polymer dispersions is 20 to 55% by weight, based on the dispersion.

4. The process as claimed in claim 1, wherein glycols or polyglycols, in particular ethylene glycol, are added to the polymerization mixture at the start or during or after the polymerization reaction, and, if appropriate, the dispersion is partly or completely freed from its water content by distillation when the polymerization is complete.

5. The process as claimed in claim 1, wherein the water content of the resulting polymer dispersion is removed, preferably by spray drying, and the polymer is isolated in the form of powder.

6. The process as claimed in claim 1, wherein 0.01 to 10% by weight, based on the total amount of monomers, of water-soluble, free-radical forming initiators are employed.

7. The process as claimed in claim 1, wherein 0.01 to 20% by weight, based on the total amount of monomers, of poly-(ethylenically unsaturated) monomers are employed.

8. The process as claimed in claim 1, wherein monomers belonging to the group comprising acrylic acid esters, amides or nitriles, methacrylic acid esters, amides or nitriles, acrylic acid, methacrylic acid, vinyl-aromatics, vinyl esters, crotonic acid, crotonic esters, maleic acid, maleic acid esters or half-esters, itaconic acid, itaconic acid esters and half-esters and vinyl halides or mixtures thereof, and also monomers belonging to the group comprising divinylbenzene, (C₂-C₆)-alkanediol di-(meth)-acrylate, glycerol tri-(meth)-acrylate, pentaerythritol tri-(meth)-acrylate or mixtures thereof are employed.

9. The process as claimed in any one of claims 1, 2, 3, 4, 5, 6 ,7 or 8, wherein the polymers and polymer dispersions are subsequently worked into other polymer materials and polymer raw materials or are processed to give shaped articles and films.

## Revendications

1. Procédé de préparation de produits polymères sans émulsionnants ni colloïdes protecteurs par une copolymérisation en émulsion induite avec des radicaux libres de monomères à insaturation monoéthylénique avec des monomères à insaturation polyéthylénique copolymérisables, procédé caractérisé en ce que en opérant sans diènes acycliques conjugués, émulsionnants ni colloïdes protecteurs, et avec un ou plusieurs inducteurs radicalaires hydrosolubles, on commence par prépolymériser en émulsion aqueuse une proportion totale ou partielle des monomères à insaturation polyéthylénique copolymérisables, d'au moins 0,01 % en poids par rapport à la totalité des monomères, éventuellement seuls ou de préférence avec une proportion partielle des monomères à insaturation monoéthylénique, puis on ajoute progressivement la quantité restante des monomères à insaturation monoéthylénique ainsi que le cas échéant la quantité restante des monomères à insaturation polyéthylénique et éventuellement aussi le reste de l'inducteur, et on conduit la polymérisation du mélange jusqu'à sa fin.

2. Procédé selon la revendication 1, caractérisée en ce que les particules de la matière solide polymère ont un diamètre compris entre 0,02 et 5 µm, avec une étroite répartition des dimensions particulaires de manière que le quotient de la moyenne pondérale des diamètres (Dp) par leur moyenne numérale (Dn) soit inférieur à 1,2.

3. Procédé selon la revendication 1, caractérisé en ce que la teneur en matière solide polymère dispersée des dispersions polymériques obtenues est de 20 à 55 % en poids, relative à la dispersion.

4. Procédé selon la revendication 1, caractérisé en ce que au début, pendant ou après la réaction de polymérisation, on ajoute au mélange de polymérisation des glycols ou des polyglycols, en particulier de l'éthylèneglycol, et le cas échéant une fois la polymérisation terminée on élimine partiellement ou totalement l'eau de la dispersion par distillation.

5. Procédé selon la revendication 1, caractérisé en ce que l'on élimine l'eau de la dispersion obtenue du polymère de préférence par séchage par pulvérisation, et on isole le polymère à l'état pulvérulent.

6. Procédé selon la revendication 1, caractérisé en ce que l'on ajoute de 0,01 à 10% en poids des inducteurs radicalaires hydrosolubles par rapport à la totalité des monomères.

7. Procédé selon la revendication 1, caractérisé en ce que l'on ajoute de 0,01 à 20% en poids, par rapport à la totalité des monomères, des monomères à insaturation polyéthylénique.

8. Procédé selon la revendication 1, caractérisé en ce que l'on prend des monomères du groupe suivant : esters, amides et nitriles des acides acrylique et méthacrylique, acide acrylique et acide méthacrylique, composés vinylaromatiques, esters vinyliques, acide crotonique et esters de cet acide, acide maléique et esters ou semi-esters de cet acide, acide itaconique et esters ou semi-esters de cet acide, halogénures de vinyle, ou plusieurs de ces monomères à la fois, ainsi que des monomères pris parmi le divinylbenzène, des diacrylates ou diméthacrylates de (C₂-C₆)-alcane-diols, le triacrylate ou triméthacrylate du glycérol ou du pentaérythritol ou des mélanges de ces monomères.

9. Procédé selon l'une des revendications 1, 2, 3, 4, 5,6,7 et 8, après lequel les polymères ou les dispersions de polymères sont ensuite incorporés dans d'autres matériaux polymères ou matières premières polymères ou transformés en objets moulés ou feuilles.
